**Europäisches Patentamt**

**European Patent Office**

**Office européen des brevets**

(11) Veröffentlichungsnummer: **0 024 449**

**A1**

(12) **EUROPÄISCHE PATENTANMELDUNG**

(21) Anmeldenummer: **79103497.8**

(22) Anmeldetag: **18.09.79**

(51) Int. Cl.³: **H 05 F 7/00**
**H 02 N 11/00, F 03 G 7/00**

(30) Priorität: 04.09.79 DE 2935607
10.09.79 DE 2936444

(43) Veröffentlichungstag der Anmeldung:
**11.03.81** Patentblatt **81/10**

(84) Benannte Vertragsstaaten:
AT BE CH FR GB IT LU NL SE

(71) Anmelder: **Knipfer, Albert**
**Blumenstrasse 2**
**D-8501 Pyrbaum(DE)**

(72) Erfinder: **Knipfer, Albert**
**Blumenstrasse 2**
**D-8501 Pyrbaum(DE)**

(74) Vertreter: **Göbel, Matthias**
**Pruppacher Hauptstrasse 5-7**
**D-8501 Pyrbaum-Pruppach(DE)**

(54) **Verfahren und Vorrichtung zur Erzeugung von elektrischer Energie.**

(57) Beim Verfahren und der Vorrichtung zur Erzeugung elektrischer Energie werden in einer Mischkammer (1) Gasschichten aus großer Höhe sowie Wasser und Luft eingeblasen, in der Mischkammer (1) miteinander vermischt und verdichtet. Das Gemisch tritt über einen düsenförmigen Austritt (8) in eine Turbine (9) od.dgl. über, während zwischen einer in die Mischkammer (1) einragenden Erdungselektrode (10) und einer mit einem elektrischen Sammler, Netz od.dgl. verbundenen Abgriffelektrode (11), Spannungsüberschläge erzeugt werden.

Fig. 1

EP 0 024 449 A1

Croydon Printing Company Ltd.

- 1 -

Verfahren und Vorrichtung zur Erzeugung elektrischer
Energie

Die Erfindung betrifft ein Verfahren und eine Vorrichtung
zur Erzeugung elektrischer Energie.

Es ist bekannt elektrische Energie mittels Generatoren
zu erzeugen. Der Antrieb dieser Generatoren erfolgt bekannterweise durch Brennkraftmaschinen oder Turbinen mit
hohem Energieeinsatz. Es ist zwar schon versucht worden
Spannungspotentiale, wie sie bei Gewittern herrschen, zu
nutzen. Hierbei erweist sich jedoch die Tatsache als ungünstig, daß atmosphärische Spannungspotentiale nicht
an ortsfesten Sammlern zur Verfügung stellbar sind.

Die Erfindung hat sich zur Aufgabe gesetzt elektrische
Energie durch Ausnutzung atmosphärischer Spannungspotentiale zu erzielen.

Erfindungsgemäß sehen die Verfahrensschritte vor, daß in einer Mischkammer Gasschichten aus großer Höhe sowie Wasser und Luft eingeblasen, miteinander vermischt und verdichtet werden, das Gemisch über einen düsenförmigen Austritt an eine Turbine od.dgl. abgegeben wird und daß zwischen einer in die Mischkammer einragenden Erdungselektrode und einer Abgriffelektrode, die mit einem elektrischen Sammler, Netz od.dgl. verbunden ist, Spannungsüberschläge erzeugt werden. Nach dem Verfahren werden in der Mischkammer atmosphärische Spannungszustände erzeugt, wie sie bei Gewittern auf der Erde herrschen und die Blitzenergie der zwischen den Elektroden in der Mischkammer kontinuierlich stattfindenden Überschläge als elektrische Energie nutzbar gemacht, während die in der Mischkammer vorhandene Druckenergie pneumatisch genutzt wird.

In Fortbildung des Verfahrens können die Gasschichten aus großer Höhe über einen, insbesondere rohrförmigen Turm vermittels eines Gebläses der Mischkammer zugeführt werden.

Bei einer Vorrichtung zur Durchführung des Verfahrens, ist die Abgriffelektrode durch ein Gitter, ein Netzwerk od.dgl. gebildet, an das der elektrische Sammler oder das Stromnetz angelegt ist. Außerdem ist vorgesehen, daß die Mischkammer

- 3 -

eine Einrichtung zur Vermischung und Verdichtung des Gemischs in der Mischkammer aufweist und daß diese Einrichtung beliebig durch eine Turbine, einen Motor od.dgl. antreibbar oder der Antrieb von der durch das Gemisch getriebenen Turbine ableitbar ist.

Der Turm kann gemäß weiterer Erfindung durch lösbar fest koaxial übereinander angeordnete Rohrabschnitte gebildet sein, die außen mit einem gasförmigen Trägermedium gefüllte Trägerkörper rohrabschnittsfest aufweisen. Die Rohrabschnitte können dabei vorgefertigt aus metallischen Werkstoffen oder Kunststoffen erstellt sein und als Trägermedium kann ein Gas mit kleinem spezifischen Gewicht, z.B. Helium, dienen. Bei diesem Turm wirkt das Trägermedium der, insbesondere von den Rohrabschnitten und den Trägerkörpern aufgebrachten Schwerkraft entgegen und bewirkt durch ganz oder teilweises Tragen derselben eine Entlastung des Fundaments. Es ist möglich, die durch das Trägermedium aufgebrachte Auftriebskraft so groß zu wählen, daß das Fundament nurmehr als Anker dient.

Der Turm kann unter Beibehaltung kleiner Lagerdrucke mit beliebiger Höhe aufgerichtet werden, wobei auch Seitenkräfte durch mögliche seitliche Auslenkungen des Turms ausgeglichen werden.

- 4 -

In Ausgestaltung des Turms ist vorgesehen, daß als Trägerkörper für die Rohrabschnitte einstückige Behälter aus festem, flexiblem oder elastischem Werkstoff bzw. Geweben od.dgl. dienen. Bevorzugt sind die Trägerkörper jedoch durch mehrere sich jeweils über einen Teilumfang der Rohrabschnitte sich erstreckende Behälter gebildet, wobei sich die Behälter im wesentlichen über die ganze Länge der Rohrabschnitte oder über Teillängen derselben erstrecken können. Bei der Anordnung von sich über Teillängen erstreckenden Trägerkörpern ist eine ringförmig übereinander vorgesehene Ausbildung vorteilhaft. Um schließlich einen zusätzlichen Aufrichtungseffekt auf die Rohrabschnitte zu legen, ist bei Übereinanderanordnung von Trägerkörpern weiter vorgesehen, daß die dem Boden ferneren Trägerkörper mit jeweils größerem Volumen ausgeführt sind.

In weiterer Ausgestaltung des Turms ist vorgesehen, daß die als auswechselbare Bauelemente ausgebildeten Rohrabschnitte an den stirnseitigen Enden Flansche od.dgl. aufweisen und mittels an den Flanschen angreifenden Schrauben und/oder abgestützten Seilen an benachbarten Rohrabschnitten festgelegt sind. Hierbei können die Seile aus einem metallischen Werkstoff oder einem Kunststoff gebildet sein, wobei

- 5 -

die Verwendung metallischer Werkstoffe, die zusätzliche Nutzung der Seile als elektrische Leiter, z.B. als Blitzableiter, erlaubt. Von besonderem Vorteil hat sich die Anordnung von Verbreiterungen an den Rohrabschnitten erwiesen, die als z.B. begehbare Plattformen nutzbar sind. Durch entsprechende Verbreiterung der Flansche sind einfache Plattformen erzielbar.

Es versteht sich, daß der Turm einzeln erstellt oder mehrere Türme, z.B. bündelförmig zusammengefaßt, zu einem gemeinsamen Bauwerk aufgerichtet werden können, wobei zur seitlichen Abstandshalterung und Verbindung der Rohrabschnitte der einzelnen Türme Verbreiterungen oder mit Lochungen versehene Plattformen dienen. Bei so zusammengefaßten Türmen besteht die Möglichkeit gegebenenfalls einen Turm mit einem Fahrstuhl zu versehen.

Es ist denkbar, daß der Turm zu beliebigen Verwendungszwecken, etwa der Durchleitung gasförmiger Medien oder als Sendemast bzw. Aussichtsturm od.dgl. genutzt werden kann. Fernerhin ist die Erfindung nicht auf ein bestimmtes Trägermedium oder auf eine Anzahl oder Anordnung bzw. Ausbildung der Trägerkörper beschränkt. So ist möglich als Trägermedium jedes geeignete Gas, z.B. auch Wasserstoffgas, zu verwenden.

Die Erfindung ist anhand von Ausführungsbeispielen in der Zeichnung verdeutlicht. Hierin bedeuten:

Fig. 1 eine Vorrichtung zur Durchführung des Verfahrens schematisch,

Fig. 2 einen Teilschnitt eines Turms für eine Vorrichtung auseinandergezogen,

Fig. 3 einen Schnitt nach der Linie III—III der Fig. 2,

Fig. 4 ein Teilstück eines Turms für eine Vorrichtung anderer Ausführung,

Fig. 5 Teilstücke mehrerer zu einem Bauwerk verbundener Türme für eine Vorrichtung in Seitenansicht und

Fig. 6 das Turmbauwerk der Fig. 5 im Schnitt nach der Linie VI-VI.

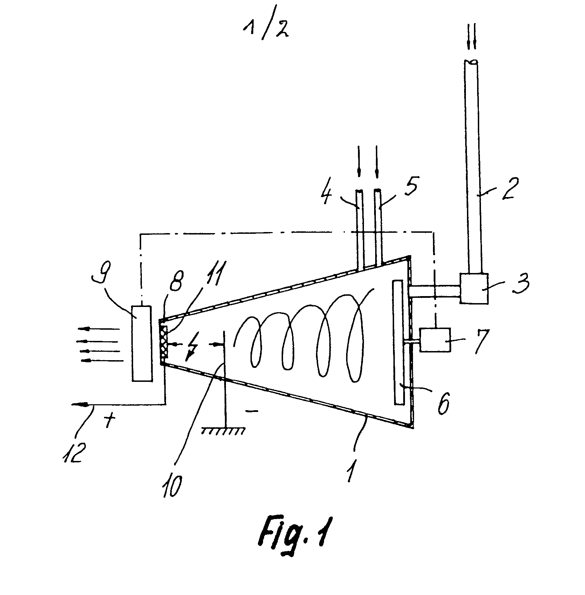

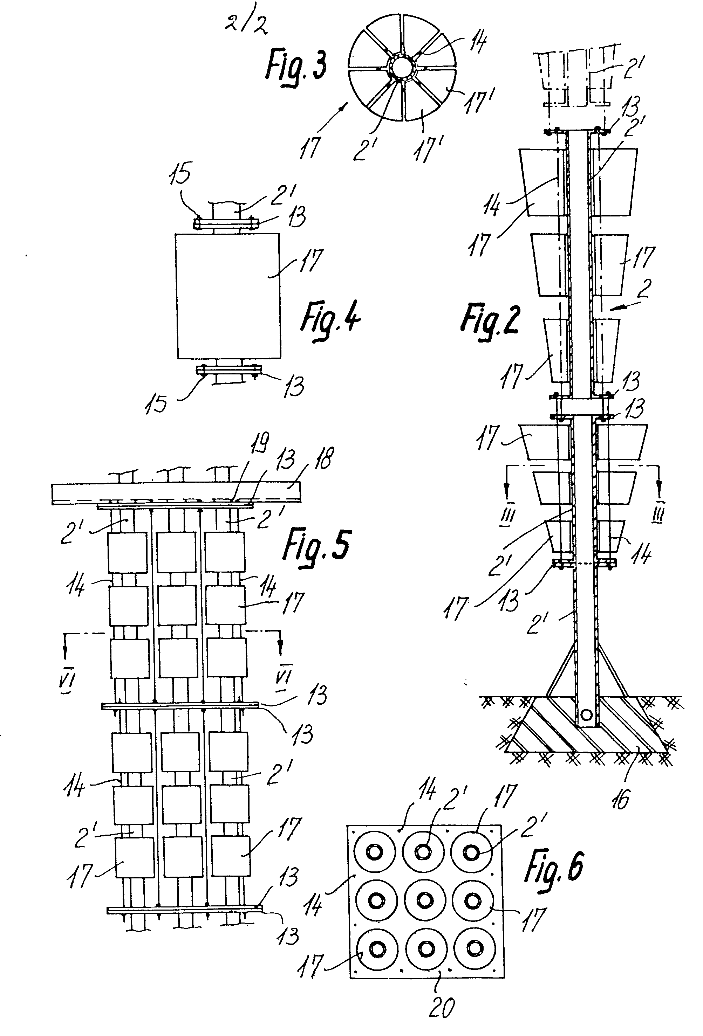

Das Verfahren wird in Fig. 1 verdeutlicht. Hierin ist mit 1 eine Mischkammer bezeichnet, die beim Ausführungsbeispiel kegelstumpfförmig ausgebildet ist. Es entspricht der Erfindung, daß auch anderweitige Mischkammerformen möglich sind. In die Mischkammer 1 sind über einen rohrförmigen Turm 2 (Fig. 2 bis 6) mittels eines Gebläses 3 aus großen Höhen geholte Gasschichten sowie über Rohrleitungen 4 und 5 Luft und Wasser einbringbar. Die Gasschichten, die Luft und das Wasser werden durch ein Flügelrad 6 mit Motor 7 oder einer Turbine in der Mischkammer 1 verwirbelt und verdichtet, wobei in der Mischkammer 1 eine einem Gewitterzustand entsprechende Atmosphäre erzeugt wird. Über einen düsenförmigen Austritt 8 der Mischkammer gelangt die verdichtete Mischung in eine Turbine 9 od.dgl., die gegebenenfalls als unmittelbares Antriebsorgan des Flügelrades 6 und des Gebläses 3 bzw. eines Generators genutzt werden kann. In die Mischkammer 1 ragt eine Erdungselektrode 10 sowie eine Abgriffelektrode 11 ein. Zwischen den beiden Elektroden 10, 11 bilden sich elektrische Entladungen aus, die als elektrische Energie, z.B. an ein Stromnetz 12 weitergeleitet werden.

Der Turm 2 ist beim Ausführungsbeispiel der Fig. 2 aus Rohrabschnitten 2' aus metallischem Werkstoff oder Kunststoff zusammengesetzt, die zur Bildung des Turms übereinander gestellt und miteinander verbunden sind. Die Rohrabschnitte 2' sind zu ihrer Verbindung an den Enden mit Flanschen 13 versehen, die gleichzeitig Widerlager für Verbindungsseile 14 bzw. entsprechend der Ausführungsform der Fig. 4 Verbindungsschrauben 15 bilden. Mit 16 ist ein bodenfester Fundamentblock bezeichnet, in dem der bodennahe Rohrabschnitt 2' des Turms verankert ist. Die Rohrabschnitte 2' weisen außen mit einem gasförmigen Trägermedium, z.B. Helium, gefüllte Trägerkörper 17 aus einem festen bzw. flexiblen oder elastischen Werkstoff bzw. einem Gewebe auf. Die Trägerkörper 17 sind in ihrer Größe so bemessen, daß der durch das Trägermedium erzielte Auftrieb die Schwerkraft des Turms ganz oder teilweise aufhebt und keine bzw. nurmehr geringe Auflagedrucke am Fundamentblock 16 wirksam werden. Die Trägerkörper 17 können kammerartig ringförmig übereinander ausgebildet und gegebenenfalls, wie in Fig. 3 gezeigt, aus Ringabschnitten 17' zusammengefügt sein. Die Rohrabschnitte 2' weisen zu den bodenferneren Enden hin Trägerkörper17 (Fig. 2) mit zunehmend größerem Volumen auf, wodurch ein Aufrichtungseffekt an den Rohrabschnitten 2' wirksam wird.

Beim Turm der Fig. 4 ist abweichend am Rohrabschnitt 2' ein einziger, umlaufend ausgebildeter Trägerkörper 17 in Anwendung gebracht.

Die Fig. 5 und 6 zeigen mehrere aus Rohrabschnitten 2' aufgerichtete Türme, die parallel im Abstand voneinander angeordnet und zu einem Turmbauwerk zusammengefaßt sind. Die Türme sind gegebenenfalls in Durchführungsöffnungen 19 von Plattformen 18 im Abstand gehalten und miteinander verbunden. Die Plattformen 18 sind beliebig, z.B. als Arbeitsbühnen od. dgl. verwendbar. Es ist möglich, den Turm oder bei zusammengefaßten Türmen einen Turm mit einem Aufzug, Fahrstuhl od.dgl. auszurüsten.

Patentansprüche

1. Verfahren und Vorrichtung zur Erzeugung von elektrischer Energie, dadurch gekennzeichnet, daß in einer Mischkammer (1) Gasschichten aus großer Höhe sowie Wasser und Luft eingeblasen, miteinander vermischt und verdichtet werden, das Gemisch über einen düsenförmigen Austritt (8) an eine Turbine od.dgl. abgegeben wird und daß zwischen einer in die Mischkammer (1) einragenden Erdungselektrode (10) und einer Abgriffelektrode (11), die mit einem elektrischen Sammler, Netz od.dgl. verbunden ist, Spannungsüberschläge erzeugt werden.

2. Verfahren nach Anspruch 1, dadurch gekennzeichnet, daß die Gasschichten aus großer Höhe über einen rohrförmigen Turm (2) vermittels eines Gebläses (3) der Mischkammer (1) zugeführt werden.

3. Vorrichtung zur Durchführung des Verfahrens nach Anspruch 1, dadurch gekennzeichnet, daß die Abgriffelektrode (11) durch ein Gitter, Netzwerk od.dgl. gebildet ist.

- 2 -

4. Vorrichtung nach einem oder mehreren der vorhergehenden Ansprüche, dadurch gekennzeichnet, daß die Mischkammer (1) eine Einrichtung zur Vermischung und Verdichtung des Gemischs aufweist, die durch eine Turbine, einen Motor od.dgl. antreibbar ist oder deren Antrieb von der Turbine (9) ableitbar ist.

5. Vorrichtung zur Durchführung des Verfahrens mit einem rohrförmigen Turm nach Anspruch 2, gekennzeichnet durch lösbar fest koaxial übereinander angeordnete Rohrabschnitte (2'), die außen mit einem gasförmigen Trägermedium gefüllte Trägerkörper (17) rohrabschnittsfest aufweisen.

6. Vorrichtung nach Anspruch 5, dadurch gekennzeichnet, daß als Trägermedium ein Gas mit kleinem spezifischen Gewicht, z.B. Helium, dient.

7. Vorrichtung nach Anspruch 5, dadurch gekennzeichnet, daß als Trägerkörper (17) für die Rohrabschnitte ein einstückiger Behälter aus festem, flexiblem oder elastischem Werkstoff bzw. Geweben od.dgl. dient.

8. Vorrichtung nach Anspruch 5, dadurch gekennzeichnet, daß die Trägerkörper (17) durch mehrere über einen Teilumfang der Rohrabschnitte sich erstreckende Behälter (17') gebildet sind.

9. Vorrichtung nach Anspruch 5 und 8, dadurch gekennzeichnet, daß sich die Trägerkörper (17) über die ganze Länge der Rohrabschnitte (2') oder über Teillängen derselben erstrecken.

10. Vorrichtung nach Anspruch 5, dadurch gekennzeichnet, daß die Rohrabschnitte (2') mehrere ringförmig übereinander ausgebildete Trägerkörper (17) aufweisen.

11. Vorrichtung nach Anspruch 10, dadurch gekennzeichnet, daß die dem Boden ferneren Trägerkörper (17) der Rohrabschnitte (2') mit jeweils größerem Volumen ausgebildet sind.

12. Vorrichtung nach Anspruch 5, dadurch gekennzeichnet, daß die Rohrabschnitte (2') an den stirnseitigen Enden Flansche (13) od.dgl. aufweisen und mittels an den Flanschen (13)angreifenden Schrauben und/oder abgestützten Seilen (14) an benachbarten Rohrabschnitten (2') festgelegt sind.

- 4 -

13. Vorrichtung nach Anspruch 12, dadurch gekennzeichnet, daß die Seile (14) aus einem metallischen Werkstoff oder einem Kunststoff gebildet sind.

14. Vorrichtung nach Anspruch 5, dadurch gekennzeichnet, daß die Rohrabschnitte (2') als Plattform od.dgl. dienende Verbreiterungen (20) aufweisen.

15. Vorrichtung nach Anspruch 5, dadurch gekennzeichnet, daß mehrere durch koaxial übereinander gestellte Rohrabschnitte (2') gebildete Türme bündelförmig einander zugeordnet und in Durchführungsöffnungen (19) von Plattformen (18) fixiert sind.

**Fig. 1**

0024449

Fig. 3

Fig. 4

Fig. 2

Fig. 5

Fig. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 451 315 (VORREITER) | 1 |
| A | DE - C - 639 000 (KERTESZ) | 1 |
| A | DE - A - 1 438 345 (SIEMENS) | 1 |
| A | BE - A - 495 043 (CAPART) | 1 |

---

**KLASSIFIKATION DER ANMELDUNG (Int. Cl.³)**

H 05 F 7/00
H 02 N 11/00
F 03 G 7/00

**RECHERCHIERTE SACHGEBIETE (Int. Cl.³)**

H 05 F 7/00
H 02 N 11/00
3/00
F 03 G 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-12-1980 | TIO |

EPA form 1503.1    06.78